# EUROPEAN PATENT APPLICATION

(11) **EP 3 716 525 A1**
(43) Date of publication of application: **30.09.2020**
(21) Application number: 19165330.2
(22) Date of filing: 26.03.2019
(51) Int. Cl.: H04L 9/32

(54) **A METHOD, APPARATUS AND SYSTEM FOR CHALLENGING A PHYSICAL UNCLONABLE FUNCTION DEVICE**

(71) Applicant: Quantum Base Limited, Stockport, Cheshire SK3 8AB (GB)
(72) Inventor: BAGCI, Ibrahim Ethem, Stockport, Cheshire SK3 8AB (GB); ZHANG, Bingsheng, Stockport, Cheshire SK3 8AB (GB); ROEDIG, Utz Alfred Fritz, Stockport, Cheshire SK3 8AB (GB)
(74) Representative: Appleyard Lees IP LLP

(57) **Abstract**

The PUF device is arranged to generate a unique response to a challenge. The method comprises accessing, by a first computing apparatus, a storage network in which transaction records are stored in at least one distributed ledger (201, 302, 402, 502, 507). The method comprises using, by the first computing apparatus, one or more transaction records in the at least one distributed ledger as an entropy source for generating a challenge for a PUF device (202, 303, 403, 503, 508). The method comprises challenging, by the first computing apparatus, the PUF device using the generated challenge so as to generate a challenge response, wherein the PUF device is provided at a physical location associated with the first computing apparatus (203, 304, 404, 504, 509). A computing apparatus for challenging the PUF device and a system comprising the computing apparatus and the PUF device are also provided.

## Description

The present invention relates generally to a method, apparatus and system for challenging a physical unclonable function, PUF, device. A PUF device is arranged to generate a unique response to a challenge. The present invention relates in particular to a method, apparatus and system for challenging a PUF device for use in a process of proving possession of a device including or associated with the PUF device.

Proof of ownership is a method used to certify the ownership logged to a data store such as a distributed ledger. Generally to prove ownership, the owner of the data must have the required private key and a certificate to prove ownership. In addition to proof of ownership, security systems also increasingly require the confirmation of proof of possession of the device for which ownership is intended to be verified. Proof of possession is also known as proof of presence. Proof of possession is a method to certify that the owner of the data is in possession of an object that is linked to the data. An example use case could be where a vehicle is taken to a service centre for a service, the service centre may be required to log the service records of the vehicle to a distributed ledger. It would be highly desirable to confirm that the service centre was indeed in possession of the vehicle when the service records are generated and logged in the distributed ledger. This provides an additional layer of security and adds trust to the system.

The present invention is in particular concerned with PUF device-based solutions for confirming proof of possession. PUF devices are arranged to generate a unique response to a challenge and are known. Such devices may use one, or more (e.g. a plurality of), structures that each exhibit quantum mechanical confinement, in order to generate the unique response. This is a very secure and strong PUF, with a particularly unique challenge-response relationship, since it is underpinned by atomic-level structure details, and related quantum mechanical features. Historically, a physical unclonable function is provided on the basis of what would commonly be considered as macroscopic, or classical physical principles. For instance, a physical unclonable function may be based on minute changes in quartz crystal oscillation frequency between different crystals, or the different capacitances between different devices as a result of different thicknesses of layers constituting those different devices, or the identification of anomalies (e.g. dead cells) in an array of memory cells. These macroscopic, or classical are typically weaker, or less secure.

A typical existing system for confirming proof of possession using a PUF device involves the untrusted entity, who wishes to confirm their possession of the device, generating a challenge for the PUF device, challenging the PUF device using the generated challenge, and recording the challenge response. A trusted entity has access to a database of challenge-response pairs. The trusted entity receives the generated challenge-response pair from the untrusted entity and confirms possession of the device by seeing whether the generated challenge-response pair exists in the database.

It is an object of the present invention to provide an improved approach for challenging the PUF device, and in particular an improved approach for challenging the PUF device for use in proving possession of a device including or associated with the PUF device.

According to the present invention there is provided a method and apparatus, and system as set forth in the appended claims. Other features of the invention will be apparent from the dependent claims, and the description which follows.

According to a first aspect of the present invention, there is provided a method of challenging a physical unclonable function, PUF, device arranged to generate a unique response to a challenge. The method comprises accessing, by a first computing apparatus, a storage network in which transaction records are stored in at least one distributed ledger. The method comprises using, by the first computing apparatus, one or more transaction records in the at least one distributed ledger as an entropy source for generating a challenge for a PUF device. The method comprises challenging, by the first computing apparatus, the PUF device using the generated challenge so as to generate a challenge response. The PUF device is provided at a physical location associated with the first computing apparatus.

The present invention therefore uses a distributed ledger storing transaction records as an entropy source for challenging a PUF device. Beneficially, this means that challenges for the PUF device can be generated from the distributed ledger, and a separate source for generating or obtaining the challenges is not required. For example, a separate database listing challenges for the PUF device is not required. Moreover, using the distributed ledger as the entropy source means that the generation of the challenge is repeatable. That is, by using the same transaction records (e.g. the same blocks of the distributed ledger) the same challenge will be generated. If more or different transaction records are used then a different challenge will be generated. The benefit of this approach is that a repeatable way of generating the same challenge for a PUF device is provided without requiring a separate data store of pre-generated challenges. There is no requirement to pre-generate challenges in the present invention, as the transaction records in the distributed ledger themselves are able to be used to generate the challenge.

The present invention has particular application in proving possession of a device including or associated with the PUF device. A first entity in possession of the device can use the one or more transaction records in the at least one distributed ledger as an entropy source for generating a challenge for a PUF device, challenge the PUF device and obtain a challenge response. A second entity in subsequent possession of the device can then confirm that the first entity was indeed in possession of the device by using the same transaction records of the distributed ledger as an entropy source for generating the same challenge for the PUF device, challenge the PUF device, and obtain the challenge response. If the challenge response is the same as the challenge response generated by the first entity, then the second entity can confirm that the first entity was indeed previously in possession of the device.

The method may comprise providing the PUF device at the physical location associated with the first computing apparatus. For example, the PUF device may be part of or may be coupled to a device that may be provided at a physical location associated with the first computing apparatus where the device is intended to undergo one or more processing operations. One example of this is when the PUF device is part of or incorporated into a vehicle which is desired to undergo a servicing operation at a service centre associated with the first computing apparatus. The PUF device may therefore be moved between different physical locations, and at these physical locations computing apparatuses may perform the methods as described in relation to the present invention to confirm possession of the device. The PUF device may, however, not be in the same location as the first computing apparatus. That is, the physical location associated with the first computing apparatus may be a different location to that of the first computing apparatus. The first computing apparatus may be able to communicate with the PUF device over a communication channel, such as a secure communication channel. Generally having the PUF device in the same location as the first computing apparatus is preferred as there will be fewer opportunities for a hostile party to influence the method by, for example, corrupting the communication channel between the first computing apparatus and the PUF device. Providing the PUF device at a separate location may also be beneficial as a way of helping to ensure that the PUF device is not able to be interfered with by a hostile party. For example, a manufacturer may provide a series of PUF devices each associated with a manufactured device. The PUF devices may be stored at a secure location which is controlled by the manufacturer. In this way, the manufacturer can help ensure that the PUF devices are not interfered with by a hostile party.

The method may further comprise using, by the first computing apparatus, the challenge response to generate a candidate transaction record for the storage network. In this way, a second computing apparatus is able to validate the candidate transaction record once in possession of the PUF device by determining whether the candidate transaction record can be recreated by applying the same generated challenge to the PUF device and detecting the challenge response.

As such, the second computing apparatus is able to use the distributed ledger to determine the same challenge for challenging the PUF device and detect the challenge response and use the challenge response to generate a transaction record. If the second computing apparatus is able to recreate the candidate transaction record generated by the first computing apparatus, then the second computing apparatus is able to prove that the first computing apparatus was indeed in possession of the PUF device. Here, in possession of the PUF device may mean that the PUF device is at the same location as the first computing apparatus. In possession of the PUF device may mean that the PUF device is not in the same location as the first computing apparatus, but the first computing apparatus is able to communicate with the PUF device over a communication channel. In this way, the present invention advantageously uses the distributed ledger as a randomness beacon. The randomness beacon is used as a challenge input for the PUF device which in turn provides a response linked to the distributed ledger's randomness beacon. The resulting response may be added to a distributed ledger as part of a transaction record. Thus, it is ensured that at the time of adding the transaction record, the entity adding the transaction record was in possession of the PUF device or a device associated with the PUF device. The transaction can then be verified at a later stage if the verifier is in possession of the PUF device. As such, a pre-recorded list of challenge response pairs is not required.

Using the challenge response to generate a candidate transaction record may comprise combining the challenge response with transaction data. The combining operation may comprise concatenating the challenge response with the transaction data. Other combining operations are within the scope of the present invention. For example, a binary AND, OR, or XOR combination operation could be used to combine the data. The transaction data may relate to information about the PUF device or a device associated with the PUF device, and/or processing operations performed by the PUF device or a device associated with the PUF device.

Using the challenge response to generate a candidate transaction record may further comprise adding the candidate transaction record onto a distributed ledger. The candidate transaction record may be added onto the distributed ledger by the first computing apparatus, i.e. the computing apparatus that generated the candidate transaction record. In other implementations, the computing apparatus that generated the transaction record may provide the candidate transaction record to another computing apparatus as a potential transaction record to be added to the distributed ledger, and the other computing apparatus either alone or in cooperation with other apparatuses may determine whether to add the transaction record on to the distributed ledger.

The candidate transaction record may be added onto the distributed ledger used to generate the challenge. Beneficially, adding the new transaction records onto the distributed ledger used to generate the challenge means that the size of the distributed ledger is not constant, and instead grows as new transactions are performed and added to the distributed ledger. This means that the distributed ledger is able to be used to generate new challenges for PUF devices. This approach of adding new transaction records onto the same distributed ledger also provides a defence against an attacker trying to influence the distributed ledger by logging specific content onto the ledger. This is because the distributed ledger will frequently change state as a result of new transaction records being added, and thus it will be challenging for an attacker to influence the content of the ledger in a meaningful way because it will be challenging for the attacker to manipulate sufficient content of the distributed ledger so as to control what random number values are obtained from the distributed ledger.

The method may comprise using, by the second computing apparatus, the challenge response to validate the candidate transaction record generated by the first computing apparatus. This means that the second computing device may verify the content of the candidate transaction record and therefore confirm proof of possession.

Using, by the second computing apparatus, the challenge response to validate the candidate transaction record may comprise: accessing, by the second computing apparatus, the storage network in which transaction records are stored in the at least one distributed ledger; using, by the second computing apparatus, the one or more transaction records in the at least one distributed ledger as an entropy source for generating a challenge for the PUF; and challenging, by the second computing apparatus, the PUF using the generated challenge so as to generate a challenge response, wherein the PUF device is provided at a physical location associated with the second computing apparatus.

The method may comprise providing the PUF device at the physical location associated with the second computing apparatus. That is the PUF device may be moved from the physical location associated with the first computing apparatus to the physical location associated with the second computing apparatus. The PUF device may, however, remain at a fixed location, and the second computing apparatus may transmit challenges to the PUF device over a communication channel such as a secure communication channel. Generally having the PUF device in the same location as the second computing apparatus is preferred as there will be fewer opportunities for a hostile party to influence the method by, for example, corrupting the communication channel between the second computing apparatus and the PUF device. Providing the PUF device at a separate location may also be beneficial as a way of helping to ensure that the PUF device is not able to be interfered with by a hostile party. For example, a manufacturer may provide a series of PUF devices each associated with a manufactured device. The PUF devices may be stored at a secure location which is controlled by the manufacturer. In this way, the manufacturer can help ensure that the PUF devices are not interfered with by a hostile party.

Using, by the second computing apparatus, the challenge response to validate the candidate transaction record may further comprise: using, by the second computing apparatus, the challenge response to generate a candidate transaction record for the storage network; and validating the candidate transaction record generated by the first computing apparatus if the second computing apparatus determines that the candidate transaction record generated by the second computing apparatus is the same as the candidate transaction record generated by the first computing apparatus.

The method may comprise adding, by the second computing apparatus, the candidate transaction record onto a distributed ledger in response to the second computing apparatus validating the candidate transaction record. The distributed ledger may be the distributed ledger used to generate the challenge. In this way, the same distributed ledger is used to generate the challenge and store the response. Alternatively, the method may comprise confirming, by the second computing apparatus, the addition of the candidate transaction record onto the distributed ledger in response to the second computing apparatus validating the candidate transaction record. In this example, the first computing apparatus may add the candidate transaction record onto the distributed ledger, and then the second computing apparatus may validate the addition using the approaches as described above.

The method may further comprise using, by the first computing apparatus, the challenge response to validate a candidate transaction record generated by a second computing apparatus. The method may further comprise adding, by the first computing apparatus, the candidate transaction record onto a distributed ledger in response to the first computing apparatus validating the candidate transaction record. The candidate transaction recorded may be added onto the distributed ledger used to generate the challenge. In this way, the same distributed ledger is used to generate the challenge and store the response. Alternatively, the method may comprise confirming, by the first computing apparatus, the addition of the candidate transaction record onto the distributed ledger in response to the first computing apparatus validating the candidate transaction record. In this example, another computing apparatus such as the second computing apparatus may add the candidate transaction record onto the distributed ledger, and then the first computing apparatus may validate the addition using the approaches as described above.

Using, by the first computing apparatus, one or more transaction records in the at least one distributed ledger as the entropy source for generating the challenge for the PUF device may comprise using a plurality of transaction records in a plurality of distributed ledgers as the entropy source for generating the challenge for the PUF device.

Using, by the first computing apparatus, the one or more transaction records as an entropy source for generating a challenge for the PUF may comprise accessing a number k of blocks in the distributed ledger, and extracting entropy from the number k of blocks in the distributed ledger, wherein k is a number greater than or equal to 1. K may be equal to 2 or more. K may be between 1 and 100 or 2 and 100. The number k of blocks in the distributed ledger may be the last k blocks in the distributed ledger. Extracting entropy from the number k of blocks in the distributed ledgers may comprise hashing the k blocks of the distributed ledger together and using the hash value as an entropy value.

The PUF device may be part of or physically coupled to another device. In this way, the manufacturer may uniquely identify the other device by tagging or fingerprinting the other device by including the PUF device which is a unique, difficult to clone (physical) function that can easily and repeatedly be read. The other device may be a mobile device such as a smartphone or tablet. The other device may be a vehicle such as a car. The device may be a consumer electronics device. The PUF device may, however, be separate from the other device. For example, a manufacture of the other device may associate the other device with a PUF device stored at a physical location (for example a secure location controlled by the manufacturer). In such examples, the method according to the first aspect of the invention may comprise the first computing apparatus and/or second computing apparatus communicating with the PUF device over a communication channel such as a secure communication channel.

The PUF device may comprise one or more structures, each structure exhibiting quantum mechanical confinement, and each structure being arranged to provide a unique response when challenged with an electrical measurement, the unique response being linked to the atomic makeup of the structure that defines the quantum mechanical confinement. The device may be arranged to facilitate an electrical challenge of at least one of the structures to generate the unique response, by facilitating an electrical measurement of an output of the structure. The unique response is derivable from the electrical measurement. Alternatively, the device may be arranged to facilitate an electrical challenge of at least two structures of the plurality in electrical combination to generate the unique response, by facilitating an electrical measurement of an output of the at least two structures of the plurality in electrical combination; the unique response being derivable from the electrical measurement. A challenge-response for a combination of such structures is far stronger than for a single structure, because combinations can easily be constructed or implemented to include a vast number of challenge-response pairs (e.g. using an array of such structures), and because a challenge-response of a combination is not simply an addition or summation of the challenge-responses in isolation. So, the challenge-response pairs can be made to be far higher than the number of structures.

The one or more distributed ledgers may be any form of distributed ledger. For example, any form of directed graph distributed storage structure. The one or more distributed ledgers may be blockchains, i.e. a linear chain of blocks storing transaction records. Other forms of distributed ledger structures such as those used by The Tangle, and Hashgraph may be used in accordance with the present invention.

The method may further comprise authenticating the PUF device by transmitting a pre-determined challenge to the PUF device, receiving the PUF response and determining whether the PUF response corresponds to a pre-determined challenge-response pair. The pre-determined challenge and challenge-response pair may be generated by the manufacturer of the PUF device. If so, the PUF device is authenticated. This approach is not directly linked to proof of possession, but can be used to verify that the PUF device is still present and has not been modified.

According to a second aspect of the invention, there is provided a computing apparatus configured to challenge a physical unclonable function, PUF, device arranged to generate a unique response to a challenge. The computing apparatus comprises an extractor module configured to access a storage network in which transaction records are stored in at least one distributed ledger; and use one or more transaction records in the at least one distributed ledger as an entropy source for generating a challenge for a PUF device. The computing apparatus comprises a challenger module configured to challenge the PUF device using the generated challenge so as to generate a challenge response, wherein the PUF device is provided at a physical location associated with the computing apparatus.

The computing apparatus may be configured to perform the method as described above in relation to the first aspect of the invention.

The extractor module may be a deterministic randomness extractor module.

The challenger module may be arranged to transform the generated challenge into a format suitable for challenging the PUF device.

According to a third aspect of the invention, there is provided a system comprising: a computing apparatus as described above in relation to the second aspect of the invention; and the PUF device. The computing apparatus may be a first computing apparatus in the system. The system may comprise a second computing apparatus as described above in relation to the second aspect of the invention. The system may be arranged to perform the method as described above in relation to the first aspect of the invention.

For a better understanding of the invention, and to show how embodiments of the same may be carried into effect, reference will now be made, by way of example only, to the accompanying diagrammatic drawings in which:
Figure 1 shows a simplified schematic diagram of a PUF device being challenged with different generated challenges;
Figure 2 shows a process diagram of an example method of challenging a PUF device according to the first aspect of the invention;
Figure 3 shows process diagram of another method of challenging a PUF device according to the first aspect of the invention;
Figure 4 shows a process diagram of another method of challenging a PUF device according to the first aspect of the invention;
Figure 5 shows a process diagram of another method of challenging a PUF device according to the first aspect of the invention.
Figure 6 shows a simplified diagram of an example computing apparatus and system according to the second and third aspects of the invention; and
Figure 7 shows a simplified diagram of another example system according to the third aspect of the invention.

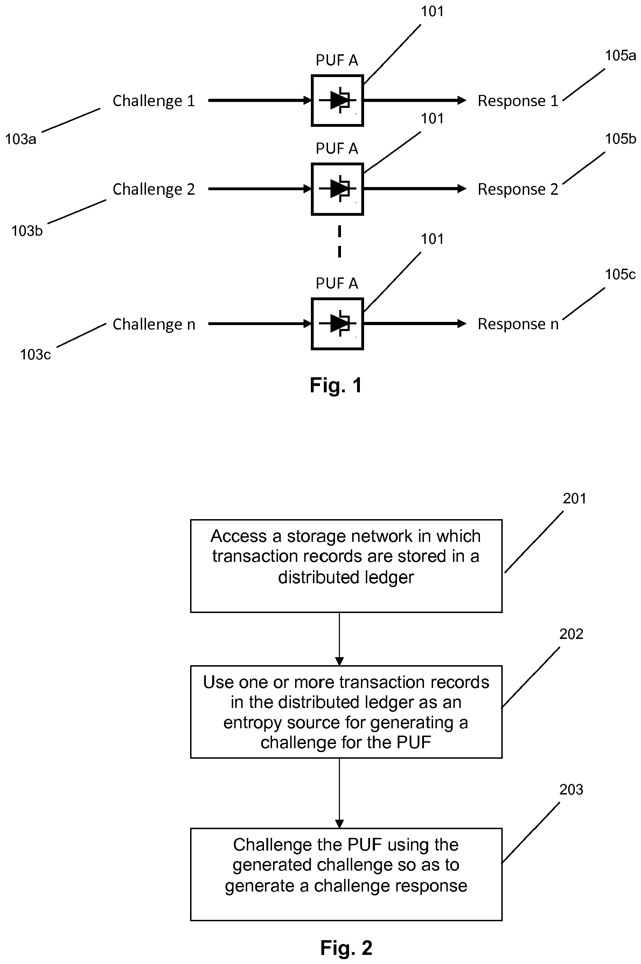

Referring to Figure 1, there is shown an example PUF device 101 arranged to generate a unique response to a challenge. The PUF device 101 in Figure 1 is shown receiving a number n of different challenges 103a, 103b, 103c. The PUF device 101 is arranged to generate a unique response 105a, 105b, 105c to each of these challenges. In other words, the PUF device 101 provides a unique number of n responses 105a, 105b, 105c to a number n of different challenges 103a, 103b, 103c.

A PUF device 101 that is suitable for use in the method of the first aspect of the invention may realize a function that maps an input challenge to a random or pseudo random output response, in so far as that the response is not predictable without actually performing the challenge. The PUF device 101 can offer an exponential or near exponential number of unique challenge-response pairs, in that there is an exponential or near exponential relationship between the challenge and response pairings. Physical characteristics that provide randomness to the PUF device 101 can be applied to the hardware of the PUF device externally, which is known as explicit randomness, or naturally exist within the PUF device 101. A PUF device 101 may be an integral component of another device. For example, the PUF device 101 may be an implicit PUF device 101 that is derived from electronic components of the other device (e.g. a car). In another example, the PUF device 101 may be a separate PUF device 101 attached to the other device.

A particular example of a PUF device 101 that is suitable for use in the present invention comprises a plurality of structures, each structure exhibiting quantum mechanical confinement, and each structure being arranged to provide a unique response when challenged with an electrical measurement, the unique response being linked to the atomic makeup of the structure that defines the quantum mechanical confinement; and the device being arranged to facilitate a challenge of at least two structures of the plurality in electrical combination to generate the unique response, by facilitating an electrical measurement of an output of the at least two structures of the plurality in electrical combination; the unique response being derivable from the electrical measurement. This PUF device 101 is described in United Kingdom Patent Number GB 2543125, the disclosures of which are hereby incorporated by reference. Such a PUF device offers many advantages in terms of being a very strong PUF, yet being extremely cheap, small and light.

Referring to Figure 2, there is shown a process diagram for an example method of challenging a PUF device 101 (Figure 1) according to the first aspect of the present invention. The method is performed by a first computing apparatus.

Step 201 of the method comprises accessing, by the first computing apparatus, a storage network in which transaction records are stored in at least one distributed ledger.

Step 202 of the method comprises using, by the first computing apparatus, one or more transaction records in the at least one distributed ledger as an entropy source for generating a challenge for a PUF device. In this way, the distributed ledger is used as a randomness beacon. Particular ways of extracting entropy from a distributed ledger are known and can be used in accordance with the present invention.

One basic way of extracting entropy from the distributed ledger comprises applying an extractor function to the header of one or more transaction records in the distributed ledger (e.g. one or more blocks in the distributed ledger). For example, considering the blockchain implementation of distributed ledgers, each block header is a 640-bit data structure that includes the previous block hash and a Merkle hash of transactions. The amount of nominal entropy in the Merkle hash of transactions alone is likely thousands of bits. Therefore, the block hash itself or components of the block hash can be used as the entropy source. In other examples, existing transaction records in the distributed ledger (e.g. blocks in the distributed ledger) can be hashed together to provide a defined output. Importantly, these approaches can be replicated by any user of the distributed ledger. That is, by performing the same operations on the same transaction records, the same entropy value can be generated and as such the same challenge for challenging the PUF device is generated. More importantly still, the content of the entropy value changes depending on the particular transaction records extracted from the distributed ledger and used as the entropy source. This means that as the distributed ledger changes and new transaction records are added to the distributed ledger and as such new entropy values for challenging PUF devices are generated.

Step 203 of the method comprises challenging, by the first computing apparatus, the PUF device using the generated challenge so as to generate a challenge response. The PUF device is provided at a physical location associated with the first computing apparatus. Advantageously, this method uses the distributed ledger as a source of entropy for challenging the PUF device. The distributed ledger can be repeatedly used to generate the same challenge by applying the same extraction operation on the same transaction records (e.g. blocks) of the distributed ledger. If a different number of transaction records is used or a different extraction operation is used then a different challenge will be generated.

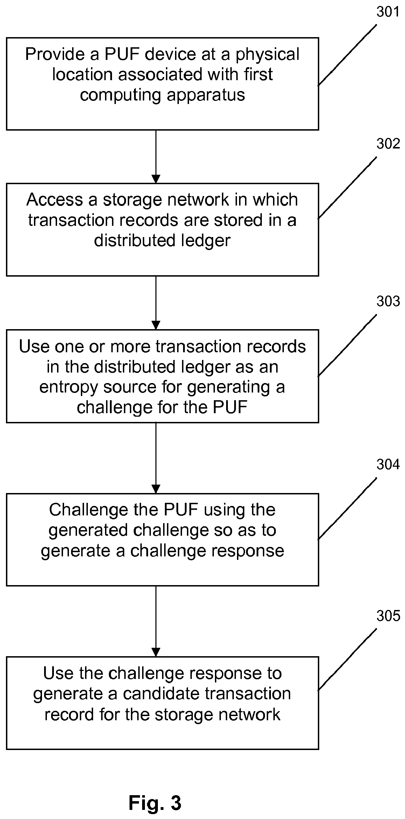

Referring to Figure 3, there is shown a process diagram for another example method of challenging a PUF device 101 (Figure 1) according to the first aspect of the present invention. The method is performed by the first computing apparatus.

Step 301 of the method comprises providing the PUF device at a physical location associated with the first computing apparatus.

Step 302 of the method comprises accessing, by the first computing apparatus, a storage network in which transaction records are stored in at least one distributed ledger.

Step 303 of the method comprises using, by the first computing apparatus, one or more transaction records in the at least one distributed ledger as an entropy source for generating a challenge for a PUF device.

Step 304 of the method comprise challenging, by the first computing apparatus, the PUF device using the generated challenge so as to generate a challenge response.

Step 305 of the method comprises using the challenge response to generate a candidate transaction record for the storage network. Advantageously, the method generates a challenge response using the challenge extracted from the distributed ledger. The challenge response is used to generate a candidate transaction record which can be used to validate that the first computing apparatus was in possession of the PUF device. That is, a second computing apparatus can extract the same challenge from the distributed ledger, and use the same PUF device to try to generate the same challenge response. If the candidate transaction record can be recreated by the second computing apparatus, then it can be confirmed that the first computing apparatus was in possession of the PUF device.

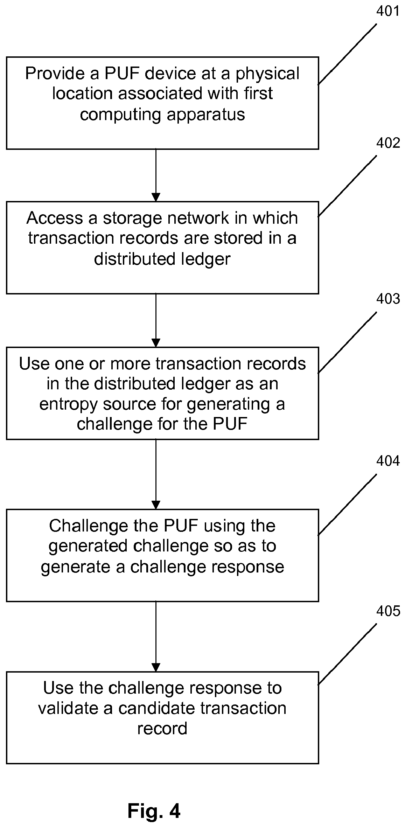

Referring to Figure 4, there is shown a process diagram for another example method of challenging a PUF device 101 (Figure 1) according to the first aspect of the present invention. The method is performed by the first computing apparatus.

Step 401 of the method comprises providing the PUF device at a physical location associated with the first computing apparatus.

Step 402 of the method comprises accessing, by the first computing apparatus, a storage network in which transaction records are stored in at least one distributed ledger.

Step 403 of the method comprises using, by the first computing apparatus, one or more transaction records in the at least one distributed ledger as an entropy source for generating a challenge for a PUF device.

Step 404 of the method comprise challenging, by the first computing apparatus, the PUF device using the generated challenge so as to generate a challenge response.

Step 405 of the method comprises using the challenge response to validate a candidate transaction record generated by a second computing apparatus. Advantageously, the first computing apparatus can extract the same challenge from the distributed ledger as extracted by the second computing apparatus, and use the same PUF device to try to generate the same challenge response. If the candidate transaction record can be recreated by the first computing apparatus, then it can be confirmed that the second computing apparatus was in possession of the PUF device.

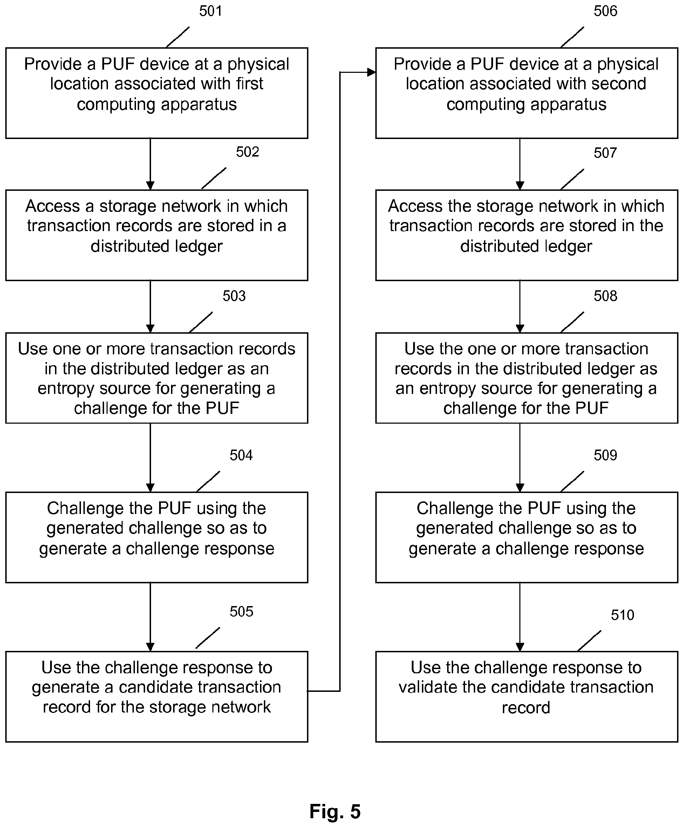

Referring to Figure 5, there is shown a process diagram for another example method of challenging a PUF device 101 (Figure 1) according to the first aspect of the present invention. The method is performed by the first computing apparatus and the second computing apparatus cooperating together.

Step 501 of the method comprises providing the PUF device at a physical location associated with the first computing apparatus.

Step 502 of the method comprises accessing, by the first computing apparatus, a storage network in which transaction records are stored in at least one distributed ledger.

Step 503 of the method comprises using, by the first computing apparatus, one or more transaction records in the at least one distributed ledger as an entropy source for generating a challenge for the PUF device.

Step 504 of the method comprise challenging, by the first computing apparatus, the PUF device using the generated challenge so as to generate a challenge response.

Step 505 of the method comprises using the challenge response to generate a candidate transaction record for the storage network.

Step 506 of the method comprises providing the PUF device at a physical location associated with the second computing apparatus.

Step 507 of the method comprises accessing, by the second computing apparatus, the storage network in which transaction records are stored in the at least one distributed ledger.

Step 508 of the method comprises using, by the second computing apparatus, one or more transaction records in the at least one distributed ledger as an entropy source for generating a challenge for the PUF device.

Step 509 of the method comprise challenging, by the second computing apparatus, the PUF device using the generated challenge so as to generate a challenge response.

Step 510 of the method comprises using the challenge response to validate the candidate transaction record generated by the first computing apparatus. Advantageously, the first computing apparatus generates a challenge response using the challenge extracted from the distributed ledger. The challenge response is used to generate a candidate transaction record which can be used to validate that the first computing apparatus was in possession of the PUF device. A second computing apparatus extracts the same challenge from the distributed ledger, and uses the same PUF device to try to generate the same challenge response. If the candidate transaction record can be recreated by the second computing apparatus, then it can be confirmed that the first computing apparatus was in possession of the PUF device.

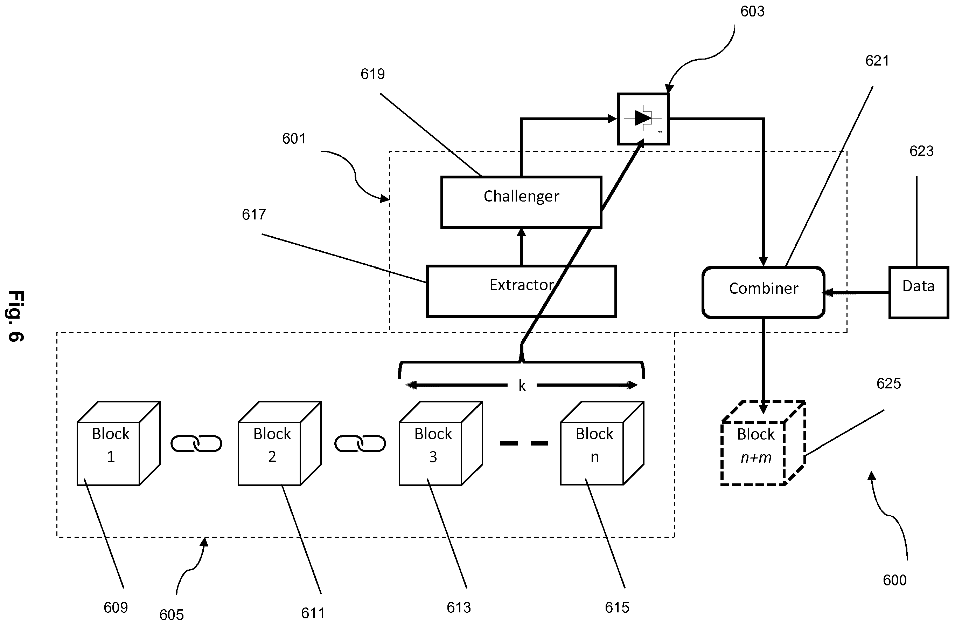

Referring to Figure 6, there is shown an example system 600 according to the third aspect of the present invention. The system 600 comprises a first computing apparatus 601 according to the second aspect of the invention, a PUF device 603, and a storage network 605. The storage network 605 stores a plurality of transaction records in a distributed ledger. In this example, the distributed ledger is a blockchain comprising a number n of blocks 609, 611, 613, 615. In this example, each of the blocks 609, 611, 613, 615 contain a transaction record.

The first computing apparatus 601 comprises an extractor module 617. The extractor module 617 in this example is a deterministic randomness extractor module. The extractor module 617 accesses the storage network 605 and uses a number k of blocks 613, 615 in the distributed ledger as an entropy source for generating a random number. In this example, the extractor module 617 extracts the last k blocks 613, 615 from the distributed ledger so as to generate the random number. The extractor module 617 generates the random number by hashing the k blocks 613, 615 together and outputting the hash value as the random number. The random number is used as a challenge for challenging the PUF device 603.

The first computing apparatus 601 comprises a challenger module 619. The challenger module 619 is configured to challenge the PUF device 603 using the generated challenge so as to generate a challenge response. In addition, in this example, the challenger module 619 receives the random number generated by the extractor module 617 and transforms the random number into a format suitable for challenging the PUF device 603. It will be appreciated that different PUF devices will have different properties and accept different forms of challenges. For example, some PUF devices will accept an input in the form of a binary number as a challenge, while other PUF devices may accept angle information of a camera, for example. The challenger module 619 ensures that the random number generated by the extractor module 617 can be used for a variety of PUF devices.

The first computing apparatus 601 comprises a combiner module 621. The challenge generated by the PUF device 603 is received by the combiner module 621 and is used to generate a candidate transaction record 625. The candidate transaction record 625 in this example is generated in the form of a candidate block 625 to be added to the distributed ledger. The combiner module 621 generates the candidate transaction record 625 by combining the generated challenge with data 623. The data 623 in this example is transaction data related to a transaction performed in relation to the PUF device 603 or a device associated with the PUF device 603. In some examples, the combining of the challenge with the data 623 may be a concatenation operation. Other forms of combining the challenge with the data 623 are within the scope of the present invention.

The candidate transaction record 625 is added onto the distributed ledger as a new block number m + 1, where m is a number greater than or equal to 1. M may be greater than or equal to 2. M may be between 1 and 100 or 2 and 100. This means that that the transaction record does not need to be recorded on the next block in the distributed ledger after the block n used in the process to generate the challenge. Subsequent blocks 627 may then be added to the distributed ledger as a result of subsequent transactions for the same or different PUF device. That is, the distributed ledger may be useable with a plurality of different PUF devices.

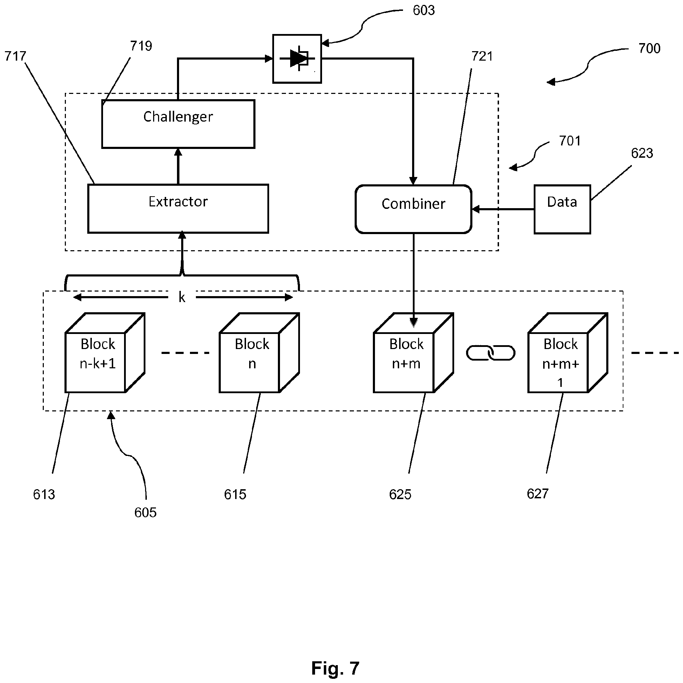

Referring to Figure 7, there is shown an example system 700 according to the third aspect of the present invention. The system 700 comprises a second computing apparatus 701 according to the second aspect of the invention, the PUF device 603 described above in relation to Figure 6, and the storage network 605 described above in relation to Figure 6. In other words, the system 700 of Figure 7 comprises the same PUF device 603 and storage network 605 as described above in relation to the storage network 605, but comprises a different computing apparatus 701.

The system 700 shown in Figure 7 relates to a time point that occurs after the time point in Figure 6. The time point shown in Figure 7 relates to a time at which the candidate transaction record 625 generated during the time point shown in Figure 6 is validated (i.e. the content is verified to confirm proof of possession of the device). This means that the content of the transaction record 625 present in block n+m of the distributed ledger is verified to confirm proof of possession of the PUF device 603.

In other words, after the PUF device 603 is used to generate the challenge response in Figure 6, the PUF device 603 is moved to a new location associated with the second computing apparatus 701 so that it can be used to validate the transaction record generated by the first computing apparatus 601 and thus confirm that the first computing apparatus 601 was in possession of the PUF device 603 when the candidate transaction record 625 was generated.

The second computing apparatus 701 comprises an extractor module 717. The extractor module 717 in this example is a deterministic randomness extractor module 717. The extractor module 717 accesses the storage network 705 and uses the same number k of blocks 613, 615 in the distributed ledger as an entropy source for generating a random number. Therefore, the second computing apparatus 701 access the same k blocks 613, 615 used by the first computing apparatus 601 and uses these same k blocks 613, 615 to generate the same random number. In other words, the second computing apparatus 701 generates the same challenge for challenging the PUF device 603 as the challenge generated by the first computing apparatus 601. It will be appreciated that information is shared between the first computing apparatus 601 and the second computing apparatus 701 to ensure that the same blocks are accessed. Information about which blocks to access to generate the challenge may be stored in the distributed ledger.

The second computing apparatus 701 comprises a challenger module 719. The challenger module 719 is configured to challenge the PUF device 603 using the generated challenge so as to generate a challenge response. In addition, in this example, the challenger module 719 receives the random number generated by the extractor module 717 and transforms the random number into a format suitable for challenging the PUF device 603.

The second computing apparatus 701 comprises a combiner module 721. The challenge generated by the PUF device 603 is received by the combiner module 721 and is used to validate the candidate transaction record 625. In particular, if the combiner module 721 is able to recreate the candidate transaction record 625 then this means that at the time the candidate transaction record 625 was generated, the first computing apparatus 601 was in possession with the PUF device 603. If the combiner module 721 is not able to recreate the candidate transaction record 625 then this means that at the time the candidate transaction record 625 was generated, the first computing apparatus 601 was not in possession with the PUF device 603. Therefore, by attempting to recreate the transaction record 625 using the same challenge and data 623, the second computing apparatus 701 is able to prove whether the first computing apparatus 601 was in possession of the PUF device 603.

In relation to Figures 6 and 7, an example use case of the present invention will now be described. The PUF device 603 may be incorporated in a vehicle (not shown). The vehicle with the PUF device 603 may be transported to a first physical location associated with the first computing apparatus 601. The first physical location is a service centre for performing service operations on the vehicle. The service centre performs service operations on the vehicle and desires to write these service operations as transaction records in the distributed ledger associated with the vehicle. To confirm possession of the vehicle, the first computing apparatus 601 uses existing transaction records in the distributed ledger as an entropy source to generate a challenge, and challenges the PUF device 603 using the generated challenge and obtains the challenge response. The first computing apparatus 601 combines the challenge response with the transaction data to be added to the distributed ledger. As such, the first computing apparatus 601 creates a new block 625 for the distributed ledger. To prove possession of the device at a later validation time, the vehicle is moved to a second physical location associated with the second computing apparatus 701. The second computing apparatus 701 uses the same transaction records in the distributed ledger to generate the same challenge for the PUF device 603, challenges the PUF device 603 and obtains the challenge response. The second computing apparatus 701 combines the challenge response with the transaction data to be added to the distributed ledger to see if the block 625 can be recreated. If the new block is recreated, then it is confirmed that the service centre was in possession of the vehicle when the service operations were carried out. It will be appreciated that this is just one example use of the present invention. The present invention can be used in any scenario where it is desired to prove possession of a device.

As discussed above, a quantum-mechanical confinement based PUF, challenged electrically, might be a good choice for use in practical implementations of the invention. However, other PUFs may be used, for example optical PUFs, where a map of a distribution of optical emitters on or in a surface is used as a unique identifier. For such an optical PUF, excitation of the emitters may form the challenge, and emission from the emitters the response. Excitation or emission may be undertaken at different angles to vary the challenge-response, or via different optical filter configurations, or the excitation may be undertaken at different intensities or wavelengths. An quantum PUF may be most suitable in certain environments, where electrical challenge-response processing is more appropriate, e.g. in vehicle servicing as above, or perhaps when having another electrical or electro-mechanical object serviced or upgraded (e.g. an appliance, a computer, and so on). However, in other instances, an optical approach might make most sense, for example in a commercial environment such as when the PUF is applied to consumer goods such as clothes, drinks, pharmaceuticals, and so on.

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of challenging a physical unclonable function, PUF, device arranged to generate a unique response to a challenge, the method comprising:
accessing, by a first computing apparatus, a storage network in which transaction records are stored in at least one distributed ledger (201, 302, 402, 502, 507);
using, by the first computing apparatus, one or more transaction records in the at least one distributed ledger as an entropy source for generating a challenge for a PUF device (202, 303, 403, 503, 508); and
challenging, by the first computing apparatus, the PUF device using the generated challenge so as to generate a challenge response, wherein the PUF device is provided at a physical location associated with the first computing apparatus (203, 304, 404, 504, 509).

2. A method as claimed in claim 1, further comprising using, by the first computing apparatus, the challenge response to generate a candidate transaction record for the storage network (305, 505), wherein a second computing apparatus is able to validate the candidate transaction record once in possession of the PUF device by determining whether the candidate transaction record can be recreated by applying the same generated challenge to the PUF device and detecting the challenge response.

3. A method as claimed in any of claims 2, wherein using the challenge response to generate a candidate transaction record comprises combining the challenge response with transaction data.

4. A method as claimed in any of claims 2 to 3, wherein using the challenge response to generate a candidate transaction record further comprises adding the candidate transaction record onto a distributed ledger.

5. A method as claimed in claim 4, wherein the candidate transaction record is added onto the distributed ledger used to generate the challenge.

6. A method as claimed in any of claims 2 to 5, further comprising using, by the second computing apparatus, the challenge response to validate the candidate transaction record generated by the first computing apparatus (405, 510).

7. A method as claimed in claim 6, wherein using, by the second computing apparatus, the challenge response to validate the candidate transaction record comprises:
accessing, by the second computing apparatus, the storage network in which transaction records are stored in the at least one distributed ledger (507);
using, by the second computing apparatus, the one or more transaction records in the at least one distributed ledger as an entropy source for generating a challenge for the PUF device (508); and
challenging, by the second computing apparatus, the PUF device using the generated challenge so as to generate a challenge response, wherein the PUF device is provided at a physical location associated with the second computing apparatus (509).

8. A method as claimed in claim 7, wherein using, by the second computing apparatus, the challenge response to validate the candidate transaction record further comprises:
using, by the second computing apparatus, the challenge response to generate a candidate transaction record for the storage network; and
validating the candidate transaction record generated by the first computing apparatus if the second computing apparatus determines that the candidate transaction record generated by the second computing apparatus is the same as the candidate transaction record generated by the first computing apparatus (510).

9. A method as claimed in any of claims 7 to 8, further comprising: adding, by the second computing apparatus, the candidate transaction record onto a distributed ledger in response to the second computing apparatus validating the candidate transaction record; or confirming, by the second computing apparatus, the addition of the candidate transaction record onto the distributed ledger in response to the second computing apparatus validating the candidate transaction record.

10. A method as claimed in any preceding claim, further comprising using, by the first computing apparatus, the challenge response to validate a candidate transaction record generated by a second computing apparatus (405).

11. A method as claimed in any preceding claim, wherein using, by the first computing apparatus, the one or more transaction records as an entropy source for generating a challenge for the PUF device comprises accessing a number k of blocks in the distributed ledger, and extracting entropy from the number k of blocks in the distributed ledger, wherein k is number greater than or equal to 1, optionally wherein extracting entropy from the number k of blocks in the distributed ledgers comprises hashing the k blocks of the distributed ledger together and using the hash value as an entropy value.

12. A method as claimed in any preceding claim, wherein the PUF device is part of or physically coupled to another device.

13. A method as claimed in any preceding claim, wherein the PUF device comprises a plurality of structures, each structure exhibiting quantum mechanical confinement, and each structure being arranged to provide a unique response when challenged with an electrical measurement, the unique response being linked to the atomic makeup of the structure that defines the quantum mechanical confinement; and the device being arranged to facilitate a challenge of at least two structures of the plurality in electrical combination to generate the unique response, by facilitating an electrical measurement of an output of the at least two structures of the plurality in electrical combination; the unique response being derivable from the electrical measurement.

14. A computing apparatus (601, 701) configured to challenge a physical unclonable function, PUF, device arranged to generate a unique response to a challenge, the computing apparatus comprising:
an extractor module (617, 717) configured to access a storage network in which transaction records are stored in at least one distributed ledger; and use one or more transaction records in the at least one distributed ledger as an entropy source for generating a challenge for a PUF device; and
a challenger module (619, 719) configured to challenge the PUF device using the generated challenge so as to generate a challenge response, wherein the PUF device is provided at a physical location associated with the computing apparatus.

15. A system (600, 700) comprising:
a computing apparatus (601, 701) as claimed in claim 14; and
the PUF device (603).
